# EUROPÄISCHE PATENTANMELDUNG

(11) **EP 4 415 084 A2**
(43) Veröffentlichungstag der Anmeldung: **14.08.2024**
(21) Anmeldenummer: 24171871.7
(22) Anmeldetag: 20.01.2021
(51) Int. Cl.: H01M 8/04082

(54) **WASSERSTOFFVERTEILSYSTEM UND BAUTEILE MIT NIEDRIGEM GEWICHT**

(62) Teilanmeldung aus: 21152585.2
(71) Anmelder: Poppe & Potthoff GmbH, 33824 Werther (DE)
(72) Erfinder: KOHLMEYER, Katrin, 33619 Bielefeld (DE); SCHNEIDEWIND, Frank, 33613 Bielefeld (DE); BÜCKERT, David-Daniel, 33659 Bielefeld (DE); HARHOFF, Burkhard, 33719 Bielefeld (DE); KRONHOLZ, Christian, 48249 Dülmen (DE); RIXE, Björn, 33611 Bielefeld (DE)
(74) Vertreter: Bardehle Pagenberg Partnerschaft mbB Patentanwälte Rechtsanwälte

(57) **Zusammenfassung**

Die vorliegende Erfindung betrifft ein wasserstoffführendes Bauteil für ein Brennstoffverteilsystem eines Energieumwandlungssystems betreibbar in einem Druckbereich von mindestens 0,1 MPa umfassend einen Grundkörper, zumindest eine Gasleitung in dem Grundkörper, zumindest einen Gaseinlass und zumindest einen Gasauslass, die über die zumindest eine Gasleitung in Fluidverbindung stehen, wobei der Grundkörper im Wesentlichen aus einem Vergütungsstahl gefertigt ist, der die folgende Zusammensetzung aufweist: 0,18 bis 0,45 Masse-% Kohlenstoff, 0,15 bis 0,40 Masse-% Silizium, 0,4 bis 1,0 Masse-% Mangan, 0,4 bis 1,2 Masse-% Chrom, 0,08 bis 0,35 Masse-% Molybdän, höchstens 0,035 Masse-% Phosphor, höchstens 0,04 Masse-% Schwefel, Eisen und erschmelzungsbedingte Stahlbegleitelemente. Der Vergütungsstahl weist zusätzlich folgende Eigenschaften auf: eine Zugfestigkeit im Bereich von 650 MPa bis 950 MPa, eine Streckgrenze oder eine 0,2%-Dehngrenze im Bereich von 500 MPa bis 850 MPa und eine Bruchdehnung im Bereich von 12% bis 35%. Die Erfindung betrifft ferner ein Wasserstoffverteilsystem, eine Anlage zur Energieumwandlung sowie ein Antriebssystem für Fahrzeuge.

## Beschreibung

### 1. Technisches Gebiet

Die Erfindung betrifft wasserstoffführende Bauteile und daraus konstruierte Wasserstoffverteilsysteme mit niedrigem Gewicht, insbesondere für Antriebsstränge von Fahrzeugen, die aus einem Vergütungsstahl gefertigt sind.

### 2. Stand der Technik

Mit einer Energiedichte von ~ 120 MJ/kg und wegen der emissionsfreien Knallgasreaktion (2 H₂ + O₂ → 2 H₂O) ist molekularer Wasserstoff (H₂) ein idealer Brennstoff für Wärmekraftmaschinen (z.B. Gasturbinen und Verbrennungsmotoren) sowie Brennstoffzellen.

Konventionelle H₂-Verteilsysteme (z.B. im Antriebsstrang eines Fahrzeugs oder in der Brennstoffzuführung einer stationären Anlage zur Stromerzeugung) werden typischerweise aus austenitischem Edelstahl (z.B. vom Typ 1.4435 seltener vom Typ 1.4571) mit hohem Nickelgehalt (üblicherweise >12.5 Masse-%) gefertigt. Von dieser Materialklasse ist bekannt, dass sie ein flächenzentriertes, kubisches Kristallgitter aufweist und dadurch das Problem der Wasserstoffversprödung, das insbesondere bei hohem Gasdruck auftritt, vermieden werden kann (vgl. beispielsweise Materials Science and Technology, Volume 33, Issue 13 (2017)).

Konventioneller austenitischer Edelstahl ist jedoch (u.a. wegen des hohen Nickel- und Molybdängehalts) teuer. Die EP 2 850 215 B1 schlägt daher einen austenitischen Stahl ohne Molybdän und mit einem reduziertem Nickelgehalt von 6 bis 9 Massen-% vor.

Auch die mechanischen Eigenschaften von austenitischem Stahl sind oft schlecht dazu geeignet, um H₂-Verteilsysteme zu fertigen, insbesondere wenn moderne Hochdrucktanks zum Einsatz kommen. Beispielsweise weist der austenitische Edelstahl vom Typ 1.4435 meist nur eine Zugfestigkeit von unter 600 MPa, eine 0,2%-Dehngrenze von unter 250 MPa und eine Dehnung von über 45% auf. Das typischerweise hohe Gewicht von aus einem solchen Material gefertigten H₂-Bauteilen kann insbesondere für Antriebstränge moderner H₂-getriebener Fahrzeuge (z.B. Pkw, Lkw, Schienenfahrzeuge, Flugzeuge, Schiffe, Drohnen etc.) ein entscheidender Nachteil sein.

Ferner lassen sich austenitische Edelstähle auch schwerer bearbeiten und / oder erfordern unübliche Bearbeitungsverfahren, so dass z.B. für die Massenfertigung von H₂-Verteilsystemen für Verbrennungsmotoren oder Brennstoffzellen neue Fertigungsanlagen installiert werden oder bestehende aufwendig umgerüstet werden müssen. Zusammengenommen stellen die skizzierten Nachteile von H₂-Verteilsystemen, die aus austenitischem Edelstahl gefertigt sind, also eine signifikante Hürde für den großflächigen Einsatz der H₂-Energietechnik dar.

In diesem Zusammenhang ist aus der EP 2 278 035 B1 ein Material mit guten H2-Versprödungseigenschaften und einer Zugfestigkeit im Bereich von 900 MPa bis 950 MPa bekannt, das die folgende Zusammensetzung aufweist:
- 0,10 bis 0,20 Massen-% Kohlenstoff,
- 0,10 bis 0,40 Massen-% Silizium,
- 0,50 bis 1,20 Massen-% Mangan,
- 0,75 bis 1,75 Massen-% Nickel,
- 0,20 bis 0,80 Massen-% Chrom,
- 0,31 bis 0,50 Massen-% Kupfer,
- 0,10 bis 1,00 Massen-% Molybdän;
- 0,01 bis 0,10 Massen-% Vanadium,
- 0,0005 bis 0,005 Massen-% Bor;
- weniger als 0,01 Massen-% Stickstoff;
- 0,01 bis 0,10 Massen-% Niobium und/oder 0,005 bis 0,050 Massen-% Titan;
- ansonsten Eisen und unvermeidlichen Verunreinigungen.

Die Herstellung und die Bestandteile eines solchen Materials sind jedoch ebenfalls aufwendig und teuer und daher insbesondere für die Massenfertigung von H₂-Verteilsystemen nur unzureichend geeignet.

Es ist somit das der vorliegenden Erfindung zu Grunde liegende Problem einige der vorstehend beschriebene Nachteile des Stands der Technik zumindest teilweise zu verringern.

### 3. Zusammenfassung der Erfindung

Das oben angeführte Problem wird zumindest teilweise durch den Gegenstand des unabhängigen Anspruchs der vorliegenden Anmeldung gelöst. Beispielhafte Ausführungsformen sind in den abhängigen Ansprüchen beschrieben.

In einer Ausführungsform stellt die vorliegende Erfindung ein wasserstoffführendes Bauteil für ein Brennstoffverteilsystem eines Energieumwandlungssystems bereit, das in einem Druckbereich von zumindest 0,1 MPa betreibbar ist und einen Grundkörper, zumindest eine Gasleitung in dem Grundkörper und zumindest einen Gaseinlass und zumindest einen Gasauslass umfasst, die über die zumindest eine Gasleitung in Fluidverbindung stehen. Der Grundkörper ist dabei im Wesentlichen aus einem Vergütungsstahl gefertigt, der die folgende Zusammensetzung aufweist:
- 0,18 bis 0,45 Masse-% Kohlenstoff,
- 0,15 bis 0,40 Masse-% Silizium,
- 0,4 bis 1,0 Masse-% Mangan,
- 0,4 bis 1,2 Masse-% Chrom,
- 0,08 bis 0,35 Masse-% Molybdän,
- höchstens 0,035 Masse-% Phosphor,
- höchstens 0,04 Masse-% Schwefel,
- Eisen und erschmelzungsbedingte Stahlbegleitelemente. Der Vergütungsstahl aus dem der Grundkörper im Wesentlichen gefertigt ist, weist ferner die folgenden Eigenschaften auf:
- eine Zugfestigkeit im Bereich von 650 MPa bis 950 MPa;
- eine Streckgrenze oder eine 0,2%-Dehngrenze im Bereich von 500 MPa bis 850 MPa; und
- eine Bruchdehnung im Bereich von 12% bis 35%.

Wo nicht anders angegeben sind Materialeigenschaften nach den einschlägigen Industrienormen zu bestimmen (z.B. nach ISO 6892-1). Ferner ist hier und im Folgenden der Begriff "im *Wesentlichen"* als *"innerhalb typischer Konstruktions-, Mess- und* / *oder Fertigungstoleranzen"* zu verstehen. Ebenfalls ist zu verstehen, dass je nachdem ob der Vergütungsstahl aus Erzen oder aus Recyclingmaterial gewonnen wird, unterschiedliche Stahlbegleitelemente vorliegen können.

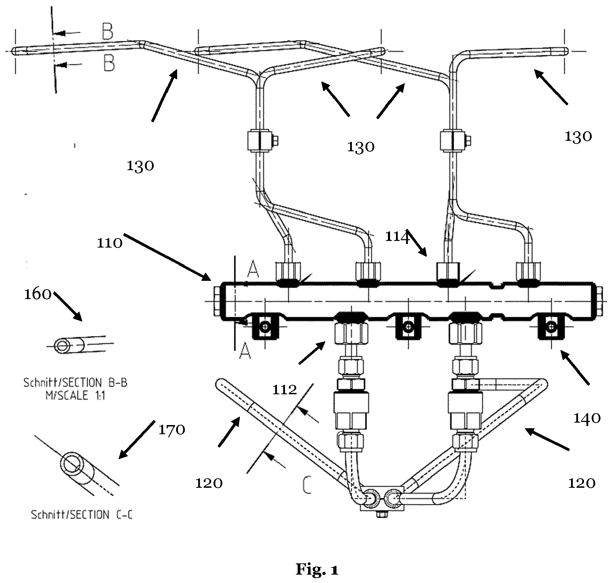

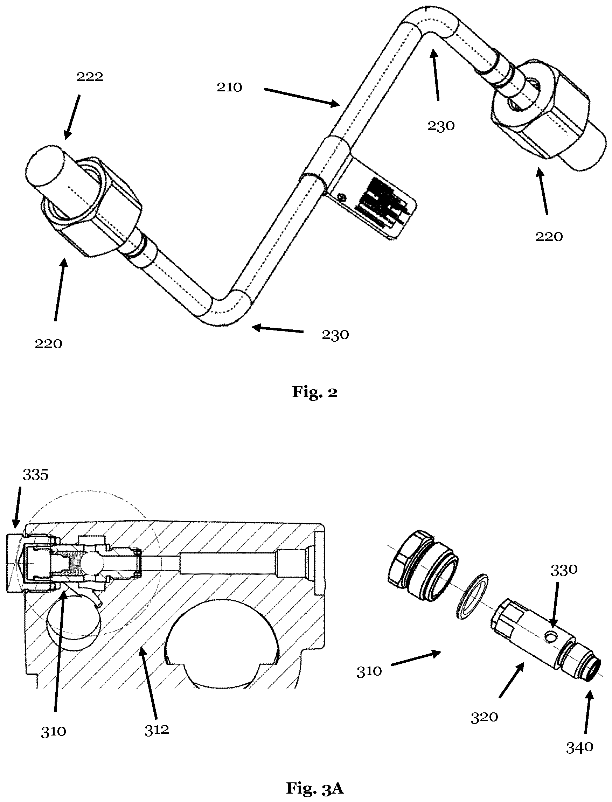

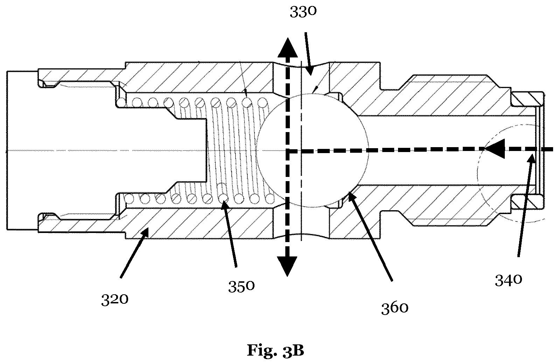

Das vorstehend spezifizierte wasserstoffführende Bauteil kann beispielsweise ein Rohr (siehe Fig. 2), ein Ventil (siehe Fig. 3A und Fig. 3B), ein T-Stück, ein Druckminderer, ein Filter, ein Durchflussbegrenzer oder ein gemeinsamer Verteiler (z.B. Fig.1) sein oder zumindest zwei dieser Funktionen in einem gemeinsamen Bauteil kombinieren.

Der Grundkörper des Bauteils kann dabei so konstruiert sein, dass er im Dauerbetrieb einem Gasinnendruck von zumindest 30 MPa, bevorzugt von zumindest 70 MPa und mehr bevorzugt von zumindest 100MPa standhält.

Insbesondere kann der Teil des Grundkörpers, der die Gasleitung umschließt, eine maximale Wandstärke im Bereich von nur 0,8 mm - 9 mm, bevorzugt im Bereich von 1 mm - 6 mm und mehr bevorzugt im Bereich von 1 mm - 5 mm aufweisen.

Aus solchen Bauteilen lassen sich somit H₂-Verteilsysteme fertigen, die im Vergleich zum Stand der Technik ein signifikant geringeres Gewicht aufweisen, jedoch trotzdem (hoch-)druckbeständig und gegen wasserstoffinduzierte Versprödung resistent sind und sich einfach bearbeiten (z.B. CNC-Fräsen, Bohren, Biegen und / oder Schweißen) lassen. Im Gegensatz zum Stand der Technik kann hierbei auch auf langjährig erprobte Fertigungsverfahren zurückgegriffen werden, die beispielsweise auch bei der Fertigung von Dieselantriebsträngen zum Einsatz kommen.

Es hat sich gezeigt, dass die Resistenz gegen wasserstoffinduzierte Versprödung der hier beschriebenen Bauteile und Verteilsysteme dadurch noch weiter verbessert werden kann, dass der Vergütungsstahl auf der Innenseite der zumindest einen Gasleitung eine Fehlertiefe von höchstens 5% der Wandstärke aufweist. Insbesondere kann die Fehlertiefe höchstens 200 µm, bevorzugt höchstens 130 µm aufweisen.

Ferner ist es vorteilhaft, insbesondere für Hochdruckbauteile und Hochdruckverteilsysteme mit geringer Wandstärke und guten Umformungs- und Fügeeigenschaften, dass der Kohlenstoffgehalt des Vergütungsstahls des Grundköpers im Bereich von 0,18 bis 0,33 Masse-%, bevorzugt im Bereich von 0,22 bis 0,29 Masse-% liegt.

Die Versprödungsresistenz der beschriebenen Bauteile und Verteilsysteme kann ferner dadurch verbessert werden, dass der Phosphorgehalt des Vergütungsstahls kleiner oder gleich 0,025 Masse-% beträgt und / oder der Schwefelgehalt des Vergütungsstahls kleiner oder gleich 0,010 Massen-% beträgt.

Für besonders hohe Anforderungen an die beschriebenen Bauteile und Verteilsysteme (z.B. an die Druckbeständigkeit, die H₂-Kompatibilit und / oder die Umformungs- und Fügeeigenschaften) kann die Zugfestigkeit des Vergütungsstahls im Bereich von 700 MPa bis 950 MPa, bevorzugt im Bereich von 750 MPa bis 950 MPa, noch mehr bevorzugt im Bereich von 750 MPa bis 900 MPa liegen, und / oder
die Streckgrenze oder die 0,2%-Dehngrenze des Vergütungsstahls im Bereich von 600 MPa - 850 MPa, mehr bevorzugt im Bereich von 650 MPa bis 800 MPa liegen, und / oder die Bruchdehnung des Vergütungsstahls im Bereich von 13% bis 30%, bevorzugt im Bereich von 14% bis 28% und noch mehr bevorzugt im Bereich von 15% bis 25% liegen.

Beispielsweise können die beschriebenen Bauteile zumindest zwei Untereinheiten aufweisen, die durch zumindest eine Schweiß- und/oder zumindest eine Lötverbindung verbunden sind.

Ferner kann in einigen Ausführungsformen der vorliegenden Erfindung eine Außenfläche des Grundkörpers des jeweiligen Bauteils mit zumindest einer der folgenden Beschichtungen beschichtet sein: einer Zink-Nickel-Beschichtung; einer galvanischen Beschichtung; einer Beschichtung, die durch elektrophoretische Abscheidung erzeugt wurde oder einer Pulverbeschichtung.

Hierbei kann die gewählte Beschichtung für mindestens 96 Stunden, bevorzugt für mindestens 150 Stunden und mehr bevorzugt für mindestens 720 Stunden gemäß DIN EN ISO 9227 korrosionsbeständig (z.B. gegen Rotrost) sein, um einen Dauereinsatz der beschriebene Bauteile und Systems auch im Freien und bei schwierigen Witterungs- oder Umweltbedingungen (z.B. Spritzwasser mit darin gelöstem Streusalz) gewährleisten zu können.

Die Materialeigenschaften des Vergütungsstahls aus dem der Grundkörper der vorstehend beschriebenen wasserstoffführenden Bauteile im Wesentliche gefertigt ist, lassen sich beispielsweise dadurch erzielen, dass in einem ersten Schritt ein geeignetes Ausgangsmaterial (z.B. ein Warmrohr oder ähnliches Halbzeug) kaltumgeformt wird, um durch die Kaltverfestigung des Gefüges die gewünschte mechanische Festigkeit zu erhalten. Anschließend kann das umgeformte Ausgangsmaterial einem Glühprozess unterzogen werden, um die gewünschten vorstehend spezifizierten mechanischen Eigenschaften zu erhalten. Zur Qualitätskontrolle könne schließlich die resultierenden Eigenschaften des Werkstoffs bestimmt werden und geeignete Halbzeuge ausgewählt werden.

In einer weiteren Ausführungsform stellt die vorliegende Erfindung ein Wasserstoffverteilsystem für ein Energieumwandlungssystem bereit, das zumindest ein erstes wasserstoffführendes Bauteil wie vorstehend beschrieben und bevorzugt zumindest ein zweites wasserstoffführendes Bauteil wie vorstehend beschrieben aufweist, wobei die beiden Bauteile zusammen in Fluidverbindung stehen - beispielsweise über eine Schraubverbindung, einen Stauchkopf mit Überwurfmutter und /oder eine Schweißverbindung und / oder eine Lötverbindung.

Beispielsweise kann ein solches Wasserstoffverteilsystem eine Hochdrucksektion und bevorzugt eine Niederdrucksektion und einen Druckminderer umfassen, der die Hochdrucksektion mit der Niederdrucksektion verbindet, wobei die Hochdrucksektion für eine Betriebsdruck von mindestens 30 MPa, bevorzugt von mindestens 70 MPa und mehr bevorzugt von mindestens 100 MPa ausgelegt ist.

Dabei kann die Hochdrucksektion eines oder mehrere der folgenden Bauteile umfassen: ein Außentankventil oder ein Innentankventil, einen Filter, ein Rückschlagventil, ein Überdruckventil, zumindest eine Befüllleitung und zumindest eine Entnahmeleitung; einen Koaleszensfilter, ein T-Stück; einen Befüllstutzen, einen gemeinsamer Verteiler und ein Magnetventil.

Derartige Verteilsysteme eigenen sich u.a. wegen ihres niedrigen Gewichts insbesondere für den Antriebsstrang von H₂-Fahrzeugen wie Flugzeugen, Drohnen, Zügen, Schiffen oder KFZ mit H₂-Antrieb und / oder H₂-Stromerzeugungsanlagen.

Beispielsweise kann ein stationäres oder mobiles Energieumwandlungssystem folgende Komponenten aufweisen; eine Wasserstoffzuleitung oder einen Wasserstofftank, einen Wasserstoffverbrennungsmotor, eine Wasserstoffgasturbine und / oder eine Brennstoffzelle; und ein Wasserstoffverteilsystem wie vorstehend beschrieben, das den Wasserstoff von der Zuleitung oder dem Tank zu dem Verbrennungsmotor, der Gasturbine und / oder der Brennstoffzelle leitet.

Ferner kann ein H₂-Antriebssystem für ein Fahrzeug zumindest einen Hochdruckwasserstofftank, einen Wasserstoffverbrennungsmotor, eine Wasserstoffgasturbine und / oder eine Brennstoffzelle und
ein Wasserstoffverteilsystem wie vorstehend beschrieben umfassen, wobei das Wasserstoffverteilsystem den Wasserstoff von dem zumindest einen Hochdruckwasserstofftank zu dem Verbrennungsmotor, der Gasturbine und / oder der Brennstoffzelle leitet.

### 4. Beschreibung der Zeichnungen

Gewisse Aspekte der vorliegenden Erfindung werden im Folgenden mit Bezugnahme auf die angefügten Zeichnungen beschrieben. Diese Zeichnungen zeigen:
- **Fig. 1**: ein Teilsystem eines Wasserstoffverteilsystems für einen Wasserstoffverbrennungsmotor gemäß einer Ausführungsform der vorliegenden Erfindung;
- **Fig. 2**: ein Z-förmiges Wasserstoffverteilrohr mit Stauchköpfen und Überwurfmuttern gemäß einer Ausführungsform der vorliegenden Erfindung,
- **Fig. 3A**: ein Rückschlagventil für eine Ventilbaugruppe gemäß einer Ausführungsform der vorliegenden Erfindung,
- **Fig. gB**: einen Längsschnitt durch den Ventilgrundkörper des Ventils von Fig. 3A

### 5. Detaillierte Beschreibung einiger Ausführungsbeispiele

Im Folgenden werden einige exemplarische Ausführungsformen der vorliegenden Erfindung am Beispiel einiger exemplarischer Verteilsysteme und Bauteile für H₂-Antriebsstränge eines Kfz beschrieben. Die vorliegende Erfindung kann jedoch gleichermaßen auch in anderen Fahrzeugen wie Schiffen, Zügen, Flugzeugen oder Drohnen zum Einsatz kommen sowie in mobilen oder stationären Anlagen zur Energieumwandlung bzw. Stromerzeugung. Hierbei werden verschiedenen Merkmalskombinationen mit Bezugnahme auf die dargestellten Ausführungsformen der vorliegenden Erfindung beschrieben. Naturgemäß müssen nicht alle Merkmale der beschriebenen Ausführungsformen vorhanden sein, um die vorliegende Erfindung zu realisieren. Ferner könne die Ausführungsformen durch Kombinieren gewisser Merkmale einer Ausführungsform mit einem oder mehreren Merkmalen einer anderen Ausführungsform modifiziert werden - falls dies technisch kompatibel und sinnvoll ist - ohne von der Offenbarung und dem Schutzumfang der vorliegenden Erfindung abzuweichen, der durch die Patentansprüche definiert ist.

Fig. 1 zeigt ein Teilsystem eines H₂-Hochdruckverteilsystems für einen Vierzylinder-H₂-Verbrennungsmotor gemäß einer Ausführungsform der vorliegenden Erfindung. Das Verteilsystem umfasst dabei einen gemeinsamen Verteiler 110 mit zwei Gaseinlassanschlüssen 112, die über zwei Gaszuleitungen 120 gespeist werden. In der vorliegenden Ausführungsform weisen die Gaszuleitungen 120 einen Außendurchmesser von 10 mm und einen Innendurchmesser von 7 mm auf (siehe Querschnitt 170 der Gaszuleitung 120). Die Wandstärke der beiden Zuleitungen 120 beträgt in dieser Ausführungsform somit 1,5 mm.

Der gemeinsame Verteiler 110 lässt sich über Befestigungsblöcke 140 z.B. am Verbrennungsmotor befestigen (z.B. über Schraubverbindungen). Da die Befestigungsblöcke 140 nicht mit dem Wasserstoff in Kontakt kommen, können sie auch aus einem anderen Material gefertigt sein als die Grundkörper der wasserstoffführenden Bauteile des dargestellten H₂-Verteilsystems (siehe Abschnitt 2 oben). Der gemeinsame Verteiler 110 weist ferner vier Ausgangsanschlüsse 114 auf, an denen jeweils ein H₂-Verteilrohr 130 angeschlossen ist, das H₂-Gas zu einer zugehörigen Einspritzvorrichtung des zugehörigen Verbrennungszylinders (nicht dargestellt) leitet. Die Verteilrohre 130 weisen dabei einen Außendurchmesser von 6,35 mm und einen Innendurchmesser von 4 mm auf. Die Wandstärke der Verteilrohre 130 beträgt somit 1,125 mm (siehe Querschnitt 160 der Verteilrohre 120).

Das dargestellte Verteilsystem und insbesondere die Rohrdurchmesser der Gaszuleitungen 120 und der Verteilrohre 130 sind für den Betrieb mit einem H₂-Hochdrucktank mit einem Gasdruck von 30 MPa ausgelegt. Die vorliegende Erfindung umfasst jedoch auch H₂-Bauteile und H₂-Verteilsysteme, die für höhere Betriebsdrücke (z.B. 70 MPa oder 100 MPa) ausgelegt sind.

Fig. 2 zeigt ein Z-förmiges H₂-Verteilrohr 210 gemäß einer Ausführungsform der vorliegenden Erfindung. Das Rohr 210 lässt sich über zwei Stauchköpfe 222 mit Überwurfmuttern 220 mit anderen Bauteilen eines H₂-Verteilsystems verbinden. Die Materialeigenschaften des Vergütungsstahls aus dem der Grundkörpers des Verteilrohrs 210 (und ggf. die Stauchköpfe und Überwurfmuttern) gefertigt sind (siehe Abschnitt 2 oben) erlauben es, stark gebogene Rohre mit engen Biegeradien zu fertigen ohne die Druckbeständigkeit des Verteilrohres 210 zu beinträchtigen. Beispielsweise kann der Biegeradius im Bereich von 1,5 bis 2,2 des Rohrdurchmessers liegen.

Um das Verteilrohr 210 gegen externe Einflüsse zu schützen (z.B. gegen Korrosion) ist die Außenfläche des Grundkörpers des Verteilrohres 210 (und ggf. die Außenflächen der Stauchköpfe 222 und der Überwurfmuttern 220) mit einer Beschichtung beschichtet. Beispielsweise kann zu diesem Zweck wie oben beschrieben eine Zink-Nickel-Beschichtung, eine galvanische Beschichtung, eine Beschichtung, die durch elektrophoretische Abscheidung erzeugt wurde (z.B. eine kathodische Tauchlackbeschichtung) oder eine Pulverbeschichtung zum Einsatz kommen. Bevorzugt ist eine solche Beschichtung für mindestens 96 h, mehr bevorzugt für mindestens 150 h und noch mehr bevorzugt für mindestens 720 Stunden gemäß DIN EN ISO 9227 korrosionsbeständig (z.B. gegen Rotrost). Eine solche Beschichtung kann auch für die in Fig. 1 dargestellten oder andere wie oben beschriebene H₂-Bauteile zum Einsatz kommen.

Fig. 3A zeigt ein weiteres wasserstoffführendes H₂-Bauteil gemäß einer weiteren Ausführungsform der vorliegenden Erfindung. Hierbei handelt es sich um ein Rückschlagventil 310, das beispielsweise in einer Ventilbaugruppe 312 oder einer Befüllleitung (nicht dargestellt) verwendet werden kann. Das Rückschlagventil 310 umfasst einen Ventilgrundkörper 320 mit einem axial angeordnetem Gaseinlass 340 und zwei radial angeordneten Gasauslässen 330 sowie einer Verschlusskappe 335.

Der Ventilgrundkörper 320 und ggf. die Verschlusskappe 335 sind aus einem Vergütungsstahl wie in Abschnitt 2 oben beschrieben gefertigt. Dies erlaubt es Rückschlagventile mit geringer Wandstärke und guten H₂-Versprödungseigenschaften zu fertigen, die druckbeständig sind und im Vergleich zum Stand der Technik ein geringeres Gewicht aufweisen und die sich ebenfalls einfach herstellen lassen. Der Grundkörper 320 des Rückschlagventils 310 lässt sich beispielsweise in einfacher Weise CNC-Fräsen und / oder Bohren ohne, dass seine H₂-Kompatibilität und Druckbeständigkeit beeinträchtig werden. Hierbei können geringe Wandstärken (z.B, im Bereich von 0,8 mm bis 5 mm) realisiert werden und trotzdem eine hohe Druckbeständigkeit im Dauerbetrieb und einem Betriebsdruck von bis zu 100 MPa oder mehr gewährleistet werden.

Fig. 3B zeigt einen Längsschnitt durch den Grundkörper 320 des Rückschlagventils 310 von Fig. 3A. Der Gasfluss vom Gaseinlass 340 zu den beiden Gasauslässen 330 ist durch den gestrichelten Pfeil illustriert. In der dargestellten Konfiguration ist das Ventil geschlossen indem eine Rückschlagfeder 350 eine metallische Abdichtkugel 360 gegen eine Dichtfläche des Ventilgrundkörpers 320 presst. Überschreitet der H₂-Gasdruck am Gaseinlass 340 den durch die Rückschlagfeder 350 bereitgestellten Abdichtdruck, öffnet sich das Rückschlagventil, und das H₂-Gas kann vom Gaseinlass 340 zu den beiden Gasauslässen 330 strömen.

Gemäß der vorliegenden Erfindung ist der Ventilgrundkörper 320 und ggf. die Abdichtkugel 360 sowie ggf. die Rückschlagfeder 350 aus einem wie oben in Abschnitt 2 beschriebenen Vergütungsstahl gefertigt. Dies erlaubt es H₂-kompatible und hochdruckbeständige Rückschlagventile (sowie andere Ventiltypen bzw. H₂-Bauteile) zu fertigen, die ein niedriges Gewicht aufweisen und sehr gut für die Massenfertigung geeignet sind.

Die durch die vorliegende Erfindung ermöglichte Gewichtsreduzierung und Effizienzgewinne können daher einen substantiellen Beitrag dazu leisten, der umweltfreundlichen H₂-Energietechnik zum Durchbruch zu verhelfen.

## Patentansprüche

1. Wasserstoffverteilsystem für ein Energieumwandlungssystem betreibbar in einem Druckbereich von mindestens 0,1 MPa, aufweisend:
zumindest ein erstes wasserstoffführendes Bauteil und zumindest ein zweites wasserstoffführendes Bauteil, die zusammen in Fluidverbindung stehen, wobei das erste und das zweite wasserstoffführende Bauteil jeweils einen Grundkörper, zumindest eine Gasleitung in dem Grundkörper, und zumindest einen Gaseinlass und zumindest einen Gasauslass, die über die zumindest eine Gasleitung in Fluidverbindung stehen, umfassen;
wobei der Grundkörper jeweils im Wesentlichen aus einem Vergütungsstahl gefertigt ist, der die folgende Zusammensetzung aufweist:
- 0,18 bis 0,45 Masse-% Kohlenstoff,
- 0,15 bis 0,40 Masse-% Silizium,
- 0,4 bis 1,0 Masse-% Mangan,
- 0,4 bis 1,2 Masse-% Chrom,
- 0,08 bis 0,35 Masse-% Molybdän,
- höchstens 0,035 Masse-% Phosphor,
- höchstens 0,04 Masse-% Schwefel,
- Eisen und erschmelzungsbedingte Stahlbegleitelemente;
wobei der Vergütungsstahl folgende Eigenschaften aufweist:
- eine Zugfestigkeit im Bereich von 650 MPa bis 950 MPa;
- eine Streckgrenze oder eine 0,2%-Dehngrenze im Bereich von 500 MPa bis 850 MPa; und
- eine Bruchdehnung im Bereich von 12% bis 35%.

2. Wasserstoffverteilsystem nach Anspruch 1, wobei der Vergütungsstahl auf der Innenseite der zumindest einen Gasleitung eine Fehlertiefe von höchstens 200 µm, bevorzugt von höchstens 130 µm aufweist.

3. Wasserstoffverteilsystem nach einem der vorhergehenden Ansprüche, wobei der Kohlenstoffgehalt des Vergütungsstahls im Bereich von 0,18 bis 0,33 Masse-%, bevorzugt im Bereich von 0,22 bis 0,29 Masse-% liegt.

4. Wasserstoffverteilsystem nach einem der vorhergehenden Ansprüche, wobei der Phosphorgehalt des Vergütungsstahls kleiner oder gleich 0,025 Masse-% beträgt und / oder der Schwefelgehalt des Vergütungsstahls kleiner oder gleich 0,010 Massen-% beträgt.

5. Wasserstoffverteilsystem nach einem der vorhergehenden Ansprüche,
wobei die Zugfestigkeit des Vergütungsstahls im Bereich von 700 MPa bis 950 MPa, bevorzugt im Bereich von 750 MPa bis 950 MPa, noch mehr bevorzugt im Bereich von 750 MPa bis 900 MPa liegt; und / oder
wobei die Streckgrenze oder die 0,2%-Dehngrenze des Vergütungsstahls im Bereich von 600 MPa bis 850 MPa, mehr bevorzugt im Bereich von 650 MPa bis 800 MPa liegt; und / oder wobei die Bruchdehnung des Vergütungsstahls im Bereich von 13% - 30%, bevorzugt im Bereich von 14% bis 28%, noch mehr bevorzugt im Bereich von 15% - 25% liegt.

6. Wasserstoffverteilsystem nach einem der vorhergehenden Ansprüche, wobei der Teil des Grundkörpers, der die Gasleitung umschließt, eine maximale Wandstärke im Bereich von 0,8 mm bis 9,0 mm, bevorzugt im Bereich von 1,0 mm bis 6,0 mm, mehr bevorzugt im Bereich von 1,0 mm bis 5,0 mm aufweist.

7. Wasserstoffverteilsystem nach einem der vorhergehenden Ansprüche, wobei das Bauteil zumindest zwei Untereinheiten aufweist, die durch zumindest eine Schweiß- und/oder zumindest eine Lötverbindung verbunden sind.

8. Wasserstoffverteilsystem nach einem der vorhergehenden Ansprüche,
wobei das Bauteil ein Rohr, ein Ventil, ein T-Stück, ein Druckminderer, ein Filter, ein Durchflussbegrenzer oder ein gemeinsamer Verteiler ist, oder zumindest zwei dieser Funktionen in einem Bauteil kombiniert.

9. Wasserstoffverteilsystem nach einem der vorhergehenden Ansprüche, wobei der Grundkörper einem Gasinnendruck von mindestens 30 MPa, bevorzugt von mindestens 70 MPa und mehr bevorzugt von mindestens 100 MPa im Dauerbetrieb standhält.

10. Wasserstoffverteilsystem nach einem der vorhergehenden Ansprüche, wobei eine Außenfläche des Grundkörpers mit zumindest einer der folgenden Beschichtungen beschichtet ist: einer Zink-Nickel-Beschichtung; einer galvanischen Beschichtung; einer Beschichtung, die durch elektrophoretische Abscheidung erzeugt wurde oder einer Pulverbeschichtung.

11. Wasserstoffverteilsystem nach einem der Ansprüche 1 bis 10, umfassend eine Hochdrucksektion und bevorzugt eine Niederdrucksektion und einen Druckminderer, der die Hochdrucksektion mit der Niederdrucksektion verbindet, wobei die Hochdrucksektion für eine Betriebsdruck von mindestens 30 MPa, bevorzugt von mindestens 70 MPa ausgelegt ist, mehr bevorzugt von mindestens 100 MPa.

12. Wasserstoffverteilsystem nach Anspruch 11, wobei die Hochdrucksektion eines oder mehrere der folgenden Bauteile umfasst: ein Außentankventil oder ein Innentankventil, einen Filter, ein Rückschlagventil, zumindest eine Befüllleitung und zumindest eine Entnahmeleitung; einen Koaleszensfilter, ein T-Stück; einen Befüllstutzen, einen gemeinsamen Verteiler und ein Magnetventil.

13. Stationäres oder mobiles Energieumwandlungssystem aufweisend:
eine Wasserstoffzuleitung oder einen Wasserstofftank;
einen Wasserstoffverbrennungsmotor, eine Wasserstoffgasturbine und / oder eine Brennstoffzelle; und
ein Wasserstoffverteilsystem nach einem der Ansprüche 1 - 12, das den Wasserstoff von der Zuleitung oder dem Tank zu dem Verbrennungsmotor, der Gasturbine und / oder der Brennstoffzelle leitet.

14. Wasserstoffantriebssystem für ein Fahrzeug umfassend:
zumindest einen Hochdruckwasserstofftank;
einen Wasserstoffverbrennungsmotor, eine Wasserstoffgasturbine und / oder eine Brennstoffzelle; und
ein Wasserstoffverteilsystem nach einem der Ansprüche 1 - 12, das den Wasserstoff von dem zumindest einen Hochdruckwasserstofftank zu dem Verbrennungsmotor, der Gasturbine und / oder der Brennstoffzelle leitet.
